# EUROPEAN PATENT APPLICATION

(11) **EP 4 350 121 A2**
(43) Date of publication of application: **10.04.2024**
(21) Application number: 23198915.3
(22) Date of filing: 21.09.2023
(51) Int. Cl.: F01D 5/00, F01D 5/34

(54) **SYSTEMS AND METHODS OF BLADE TIP REPAIR AND MANUFACUTRING USING FIELD ASSISTED SINTERING**

(30) Priority: 21.09.2022 US 202217949966
(71) Applicant: RTX Corporation, Farmington, CT 06032 (US)
(72) Inventor: CRAIG, Brian Richard, Tequesta (US); HAZEL, Brian T., Avon (US); RETTBERG, Luke Henry, Santa Barbara (US); LIU, Xuan, Glastonbury (US); MINOR, Michael J., Mansfield (US); BISCHOF, Christopher J., Southlake (US); FOWLER, Stewart S., Ft Worth (US); IVORY, Steven, Storrs Mansfield (US); LORICCO, Nicholas M., Suffield (US)
(74) Representative: Dehns

(57) **Abstract**

A method of repairing, or manufacturing, a tip (214) for an airfoil (206; 701) can comprise: removing a portion of the airfoil (206; 701) that reduces a radial height of the airfoil (206; 701) and defines a first mating surface (702; 812; 822; 832) of the airfoil (206; 701); forming a blade tip body (306;703) for the airfoil (206; 701), the blade tip body (306; 703) defining a second mating surface (912; 922; 932); and joining the first mating surface (702; 812; 822;832) to the second mating surface (912; 922; 932) via a Field Assisted Sintering Technology ("FAST") process.

## Description

### FIELD

The present disclosure relates generally to blade tip repair systems and methods, and more particularly to, systems and methods for repairing a tip of an airfoil via field assisted sintering.

### BACKGROUND

Gas turbine engines (such as those used in electrical power generation or used in modern aircraft) typically include a compressor, a combustor section, and a turbine. The compressor and the turbine typically include a series of alternating rotors and stators. A rotor generally comprises a rotor disk and a plurality of airfoils. The rotor may be an integrally bladed rotor ("IBR") or a mechanically bladed rotor.

The rotor disk and airfoils in the IBR are one piece (i.e., monolithic, or nearly monolithic) with the airfoils spaced around the circumference of the rotor disk. Conventional IBRs may be formed using a variety of technical methods including integral casting, machining from a solid billet, or by welding or bonding the airfoils to the rotor disk.

High pressure turbine blade tips experience distress during service. This distress manifest itself in the form of tip rubs, oxidation, erosion, and thermal mechanical fatigue (TMF), impact damage and mechanical rub with the shroud. Often these failure modes are combined and can accelerate distress. Eventually the distress becomes severe enough where the tip condition may drive an engine off wing for repair/overhaul. At overhaul, engine run turbine blades are repaired and restored whenever possible. Repaired turbine blades are much more economical than buying new replacement parts. However, today's turbine blade tip repair techniques do not have the durability of newly manufactured parts and show decreased life the more repairs they have had. Most blade tips are limited to 1-3 repairs depending on their operational environment.

### SUMMARY

A method of repairing a tip for an airfoil is disclosed herein. In various embodiments, the method comprises: removing a portion of the airfoil that reduces a radial height of the airfoil and defines a first mating surface of the airfoil; forming a blade tip body for the airfoil, the blade tip body defining a second mating surface; and joining the first mating surface to the second mating surface via a Field Assisted Sintering Technology ("FAST") process.

In various embodiments, the first mating surface and the second mating surface are substantially complimentary in shape.

In various embodiments, the first mating surface and the second mating surface each comprises ribs and at least partially define cooling passages of a cooling network for the airfoil.

In various embodiments, the airfoil comprises a first metal alloy and the blade tip body comprises a second metal alloy, and wherein the first metal alloy is different from the second metal alloy.

In various embodiments, forming the blade tip body comprises casting the blade tip body from a metal alloy.

In various embodiments, removing the portion of the airfoil includes grinding the portion of the airfoil to remove a defect from the tip of the airfoil.

In various embodiments, the first mating surface and the second mating surface each comprise a flatness between 0.0001 inches and 0.01 inches.

In various embodiments, a surface roughness of the first mating surface and the second mating surface are each less than 16 micro inches.

A method of manufacture is disclosed herein. In various embodiments, the method comprises: forming a main airfoil body of a bladed rotor, the main airfoil body comprising a first metal alloy; forming a blade tip body for the bladed rotor, the blade tip body comprising a second metal alloy, the second metal alloy being different from the first metal alloy; and joining a first mating surface of the main airfoil body to a second mating surface of the blade tip body via a Field Assisted Sintering Technology ("FAST") process.

In various embodiments, the first mating surface and the second mating surface each comprises ribs and at least partially define cooling passages of a cooling network for the airfoil.

In various embodiments, the method further comprises joining each blade tip body in a plurality of the blade tip body to a corresponding main airfoil body in a plurality of the main airfoil body via the FAST process.

In various embodiments, the first mating surface and the second mating surface are substantially complimentary in shape.

In various embodiments, the first metal alloy and the second metal alloy are both a single crystal alloy.

In various embodiments, forming the blade tip body includes casting a preform of the blade tip body.

In various embodiments, the first mating surface of the main airfoil body is disposed radially outward from a cooling passages network disposed within the main airfoil body.

A bladed rotor is disclosed herein. In various embodiments, the bladed rotor comprises: a hub; a rotor disk extending radially outward from the hub and defining a platform; and an airfoil extending radially outward from the airfoil, the airfoil comprising a main airfoil body made from a first metal alloy and a blade tip body made from a second metal alloy, the second metal alloy being different from the first metal alloy.

In various embodiments, the airfoil comprises a joint region disposed between the main airfoil body and the blade tip body, the joint region disposed radially outward from a cooling passages network in the main airfoil body.

In various embodiments, the bladed rotor comprises a plurality of the airfoil.

In various embodiments, the blade tip body and the main airfoil body each comprise a single crystal alloy.

In various embodiments, the rotor disk and the main airfoil body are mechanically coupled.

The forgoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1A illustrates a cross-sectional view of a gas-turbine engine, in accordance with various embodiments;
FIG. 1B illustrates a cross-sectional view of a high pressure compressor, in accordance with various embodiments;
FIG. 2 illustrates a perspective view of a bladed rotor, in accordance with various embodiments;
FIG. 3 illustrates a front view of a portion of a bladed rotor, in accordance with various embodiments;
FIG. 4 illustrates a side view of a blade of a bladed rotor, in accordance with various embodiments;
FIG. 5 illustrates a side view of a blade of a bladed rotor after use, in accordance with various embodiments;
FIG. 6 illustrates a flow chart for a repair process of a blade tip for a bladed rotor, in accordance with various embodiments;
FIG. 7 illustrates a repair process of a blade tip for a bladed rotor, in accordance with various embodiments;
FIG. 8A illustrates a mating surface of an airfoil during a repair process, in accordance with various embodiments;
FIG. 8B illustrates a mating surface of an airfoil during a repair process, in accordance with various embodiments;
FIG. 8C illustrates a mating surface of an airfoil during a repair process, in accordance with various embodiments;
FIG. 9A illustrates a mating surface of a blade tip preform during a repair process, in accordance with various embodiments;
FIG. 9B illustrates a mating surface of a blade tip preform during a repair process, in accordance with various embodiments; and
FIG. 9C illustrates a mating surface of a blade tip preform during a repair process, in accordance with various embodiments.

### DETAILED DESCRIPTION

The following detailed description of various embodiments herein refers to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

As used herein, "aft" refers to the direction associated with the tail (e.g., the back end) of an aircraft, or generally, to the direction of exhaust of the gas turbine. As used herein, "forward" refers to the direction associated with the nose (e.g., the front end) of an aircraft, or generally, to the direction of flight or motion.

Disclosed herein is a blade tip that is build up using the Field Assisted Sintering Technology ("FAST") process. FAST is a solid-state joining process which combines mechanical force, temperature, and electrical current to bond two mating surfaces via diffusion, such as a solid-state diffusion. The process can be used to join similar or dissimilar materials.

In various embodiments, a blade tip can be ground down to remove a defect, or defects, then a second blade tip (e.g., a crystal preform, such as a single crystal or polycrystal preform) can be bonded onto a mating surface of the grinded down blade to replace the blade tip. In various embodiments, the second blade tip is a single crystal preform. In various embodiments, the defect, or defects can be due to distress or oxidization. The single crystal material could be the same composition as the base material or a material with enhanced durability which is desirable at the tip due to environment and high local metal temperatures. The present disclosure is not limited in this regard.

In various embodiments, the systems and methods for blade tip repair disclosed herein can result in longer lasting, more durable blade tip repairs, longer time on wing for engines utilizing repaired blades. In various embodiments, the present disclosure is not limited to repair methods. In this regard, the process disclosed herein could be utilized for a newly manufactured part. For example, structural limitations for a tip of a blade can be limited based on oxidation, erosion, and thermal mechanical fatigue ("TMF"), impact damage and mechanical rub with the shroud in accordance with various embodiments. In contrast, other parts of a blade (e.g., a root of a blade) can be limited based on damage tolerance, high cycle fatigue stress, low cycle fatigue stress, or the like. In this regard, the process disclosed herein can facilitate a blade tip being made of a different material relative to a remainder of the blade, resulting in greater overall durability for the blade, in accordance with various embodiments.

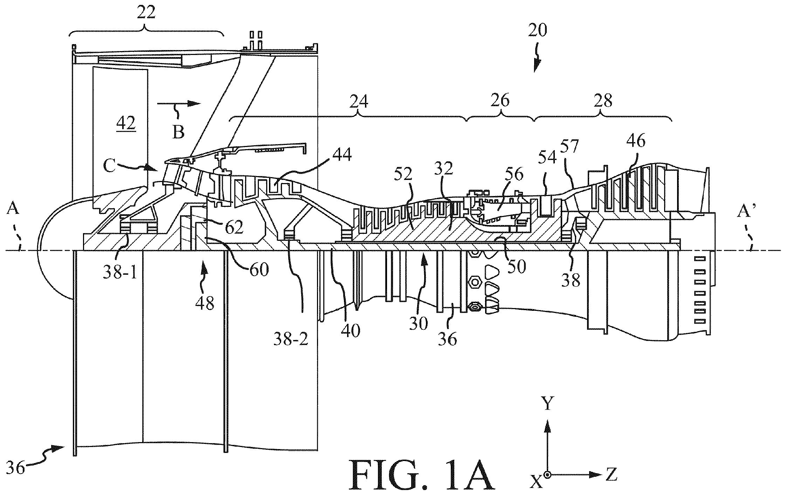

With reference to FIG. 1A, a gas turbine engine 20 is shown according to various embodiments. Gas turbine engine 20 may be a two-spool turbofan that generally incorporates a fan section 22, a compressor section 24, a combustor section 26, and a turbine section 28. In operation, fan section 22 can drive air along a path of bypass airflow B while compressor section 24 can drive air along a core flow path C for compression and communication into combustor section 26 then expansion through turbine section 28. Although depicted as a turbofan gas turbine engine 20 herein, it should be understood that the concepts described herein are not limited to use with turbofans as the teachings may be applied to other types of turbine engines including three-spool architectures, single spool architecture or the like.

Gas turbine engine 20 may generally comprise a low speed spool 30 and a high speed spool 32 mounted for rotation about an engine central longitudinal axis A-A' relative to an engine static structure 36 or engine case via several bearing systems 38, 38-1, etc. Engine central longitudinal axis A-A' is oriented in the Z direction on the provided X-Y-Z axes. It should be understood that various bearing systems 38 at various locations may alternatively or additionally be provided, including for example, bearing system 38, bearing system 38-1, etc.

Low speed spool 30 may generally comprise an inner shaft 40 that interconnects a fan 42, a low pressure compressor 44 and a low pressure turbine 46. Inner shaft 40 may be connected to fan 42 through a geared architecture 48 that can drive fan 42 at a lower speed than low speed spool 30. Geared architecture 48 may comprise a gear assembly 60 enclosed within a gear housing 62. Gear assembly 60 couples inner shaft 40 to a rotating fan structure. High speed spool 32 may comprise an outer shaft 50 that interconnects a high pressure compressor 52 and high pressure turbine 54. A combustor 56 may be located between high pressure compressor 52 and high pressure turbine 54. A mid-turbine frame 57 of engine static structure 36 may be located generally between high pressure turbine 54 and low pressure turbine 46. Mid-turbine frame 57 may support one or more bearing systems 38 in turbine section 28. Inner shaft 40 and outer shaft 50 may be concentric and rotate via bearing systems 38 about the engine central longitudinal axis A-A', which is collinear with their longitudinal axes. As used herein, a "high pressure" compressor or turbine experiences a higher pressure than a corresponding "low pressure" compressor or turbine.

The core airflow may be compressed by low pressure compressor 44 then high-pressure compressor 52, mixed and burned with fuel in combustor 56, then expanded over high-pressure turbine 54 and low-pressure turbine 46. Turbines 46, 54 rotationally drive the respective low speed spool 30 and high-speed spool 32 in response to the expansion.

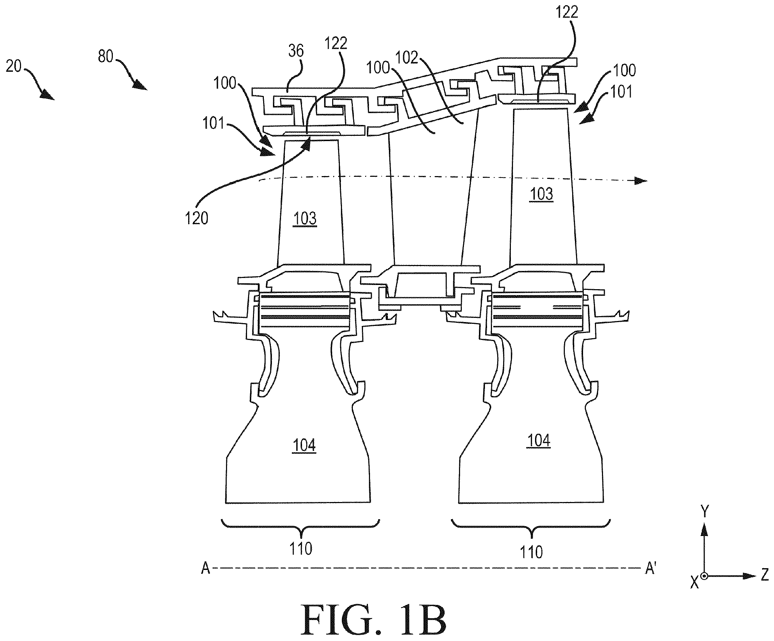

Referring now to FIG. 1B and still to FIG. 1A, according to various embodiments, each of low pressure compressor 44, high pressure compressor 52, low pressure turbine 46, and high pressure turbine 54 in gas turbine engine 20 may comprise one or more stages or sets of rotating blades 101 and one or more stages or sets of stationary vanes 102 axially interspersed with the associated blade stages but non-rotating about engine central longitudinal axis A-A'. The compressor and turbine sections 24, 28 may include rotor assemblies 110. Each compressor stage and turbine stage may comprise multiple interspersed stages of blades 101 and vanes 102. Within the rotor assemblies 110 of gas turbine engine 20 are multiple rotor disks, which may include one or more cover plates or minidisks. The blades 101 rotate about engine central longitudinal axis A-A', while the vanes 102 remain stationary with respect to engine central longitudinal axis A-A'. For example, FIG. 1B schematically shows, by example, a portion of an engine section 80, which is illustrated as a turbine section 28 of gas turbine engine 20. It will be understood that the repair and/or manufacturing systems and methods in the present disclosure are not limited to the turbine section 28 and could extend to other sections of the gas turbine engine 20, including but not limited to compressor section 24.

Engine section 80 may include alternating rows of blades 101 and vanes 102 comprising airfoils 100 that extend into the core flow path C. The blades 101 may each include a bladed rotor 100. In various embodiments, the bladed rotor 100 can comprise a mechanically bladed rotor (i.e., each airfoil 103 mechanically coupled to the rotor disk 104). However, the present disclosure is not limited in this regard. For example, the bladed rotor 100 is an integrally bladed rotor, such that the airfoils 103 (e.g., blades) and rotor disks 102 are formed from a single integral component (i.e., a monolithic component formed of a single piece), in accordance with various embodiments.

The airfoils 103 extend radially outward from the rotor disk 104. An outer engine case 120 is disposed radially outward from a tip of each airfoil 103. The outer engine case 120 comprises an abradable material 122 disposed radially adjacent to the tip of each airfoil 103. In this regard, the tip of each airfoil 103 comprises a coating, as described further herein, that includes an abrasive material. The abrasive material is configured to interface with the abradable material 122 of the outer engine case during operation of the gas turbine engine 20. Initially, the abrasive material of the coating cuts into the abradable material, forming a trench, a recess, or the like. The coating is configured protect the tips of airfoils 103 for the bladed rotor 100 from burning up during operation of the gas turbine engine 20.

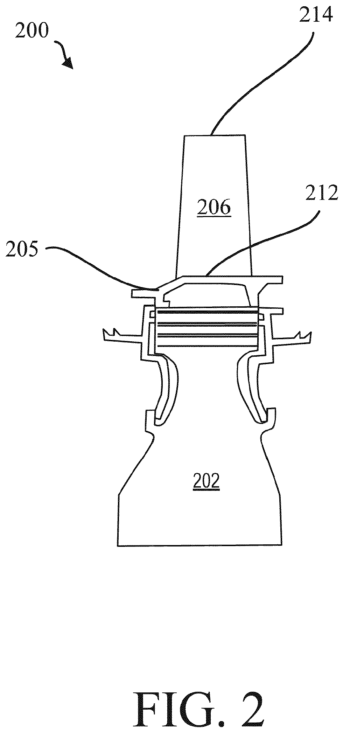

Referring now to FIG. 2, a perspective view of a bladed rotor 200 is illustrated in accordance with various embodiments. The bladed rotor 200 can be in accordance with any of the bladed rotor 100 from FIG. 1A. The present disclosure is not limited in this regard. The bladed rotor 200 comprises a hub 202, a platform 205, and a plurality of an airfoils 206. Each airfoil 206 of the bladed rotor 200 extends radially outward from a respective platform 205. For example, the airfoil 206 extends radially outward from a root 212 of the airfoil 210 to a tip 214 of the airfoil 210. The root 212 can be integral with the platform 205 or coupled to the platform 205 as described previously herein. The present disclosure is not limited in this regard.

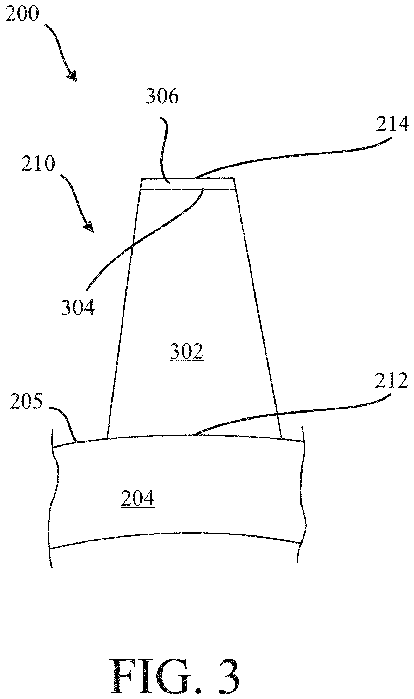

Referring now to FIG. 3, a front view of a portion of a bladed rotor 200 is illustrated with like numerals depicting like elements, in accordance with various embodiments. In various embodiments, the airfoil 210 of the bladed rotor 200 comprises a main airfoil body 302, and a blade tip body 306. In various embodiments, the main airfoil body 302 comprises a first material and the blade tip body 306 comprises a second material. For example, as described previously herein, the structurally limiting features of the main airfoil body 302 (e.g., stress from high cycle fatigue, stress from low cycle fatigue, damage tolerance, or the like) can be different compared to the structurally limiting feature of the blade tip body 306 (e.g., oxidation, erosion, TMF, or the like). In this regard, the material for the main airfoil body 302 can comprise a greater Von Mises yield stress relative to the blade tip body 306, in accordance with various embodiments. Thermal fatigue is a dramatically severe form of fatigue. Whereas normal high-cycle fatigue occurs at stresses comfortably in the elastic range (i.e., usually well below the yield point) thermal fatigue is driven by thermal strains that force deformation well into the plastic flow regime. The maximum stresses, as a consequence, are therefore well above the yield point. In this regard, thermomechanical fatigue, which is far more likely to occur at a tip 214 of an airfoil 210, can be limited by tensile strain at low temperature changing to compressive (or lower tensile) strain at high temperatures. Thus, a material that has a lower Von Mises yield stress relative to the material of the blade tip body 306 can potentially handle thermal fatigue better, resulting in a more durable airfoil 210 relative to typical blades. In various embodiments, the tip body can be a second alloy that has better rub characteristics, improving sealing capability with the outer air seal rather than improving durability.

In various embodiments, the main airfoil body 302 can comprise a first alloy (e.g., a superalloy, such as a cobalt or a nickel-based alloy), and the blade tip body 306 can comprise a second alloy that is different from the first alloy (e.g., a superalloy, such as a cobalt or a nickel-based alloy). In various embodiments, the first alloy and the second alloy can both comprise a single crystal alloy; however, the present disclosure is not limited in this regard. In various embodiments, a single crystal alloy can be more robust relative to polycrystal alloys. In various embodiments, the first alloy can comprise between 56% and 62% nickel, between 4% and 12% chromium, between 1.5% and 6% molybdenum, between 5 and 15% cobalt, between 3 and 7% tungsten, between 4 and 12% tantalum, and between 3% and 7% aluminum (e.g., an alloy in accordance with PWA 1426, PWA 1429, PWA 1432, PWA 1437, PWA 1440, PWA 1449, PWA 1455, PWA 1475, PWA 1480, PWA 1483, PWA 1484, PWA 1487, PWA 663, PWA 1497, PWA 1499, or the like). In various embodiments, the second alloy can comprise between 54% and 72% nickel, between 4% and 20% chromium, between 0.0% and 10% molybdenum, between 7% and 19% cobalt, between 0% and 6% niobium, between 0% and 10% tungsten, between 0% and 10% titanium, between 0% and 8% tantalum, between 0% and 6% rhenium, between 0% and 7% aluminum, and between 0% and 2% hafnium (e.g., Rene 100, Rene 104, Rene 108, Rene 120, Rene 125, Rene 142, Rene 220, Rene 41, Rene 77, Rene 80, Rene 88, Rene 95, Rene N4, Rene N5, Rene N500, Rene 195, or the like). In various embodiments, the first alloy comprises PWA 1429 and the second alloy comprises Rene 195. However, the present disclosure is not limited in this regard. In various embodiments, the tip body can be a second alloy that has better rub characteristics, improving sealing capability with the outer air seal rather than improving durability.

In various embodiments, the main airfoil body 302 is cast from the first alloy and the blade tip body 306 is cast from the second alloy. In various embodiments, the main airfoil body 302 is integrally formed (i.e., formed as a single piece) with the remainder of the bladed rotor (e.g., the rotor disk 204, the hub 202 from FIG. 2, etc.). However, the present disclosure is not limited in this regard.

In various embodiments, the main airfoil body 302 is coupled to the blade tip body 306 via the FAST process as described further herein. In various embodiments, the joining process may produce acceptable material properties in and around a joint region (e.g., region 304) or threshold location of the first segment. In various embodiments, the processing order depends upon which path produces the desired combination of properties at, for example, both a joint and in the material of the main airfoil body 302 and the material of the blade tip body 306. In various embodiments, a threshold location of the first segment may be determined to be, for example, a location with high structural margins and low stress. Such a location may be determined by performing a series of stress tests of the first segment to determine the location where the first segment may be coupled to the second segment. In various embodiments, the FAST process may be used to join the main airfoil body 302 to the blade tip body 306. In various embodiments of the airfoil 210, the heat treatment of the airfoil 210 occurs after a joining process. In various embodiments of the airfoil 210, the heat treatment includes at least one of a solution heat treatment, a precipitation heat treatment, or stress relief. However, the present disclosure is not limited in this regard.

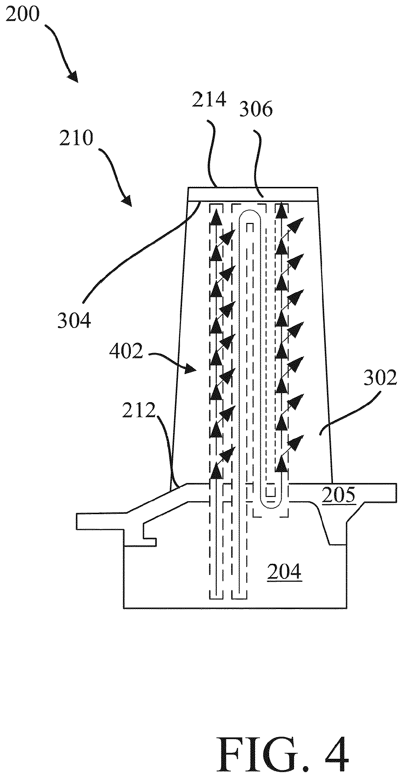

Referring now to FIG. 4, a front view of a portion of a bladed rotor 200 is illustrated with like numerals depicting like elements, in accordance with various embodiments. In various embodiments, the airfoil 210 further comprises a cooling passage network 402 disposed through the main airfoil body 302. In various embodiments, the region 304 joining the main airfoil body 302 and the blade tip body 306 can be disposed vertically above the cooling passage network 402. In this regard, the joining region 304 can be a flat mating surface of the main airfoil body 302 being joined, via the FAST process, to a flat mating surface of the blade tip body 306. In this regard, a strong joint can be created between the main airfoil body 302 and the blade tip body 306, in accordance with various embodiments.

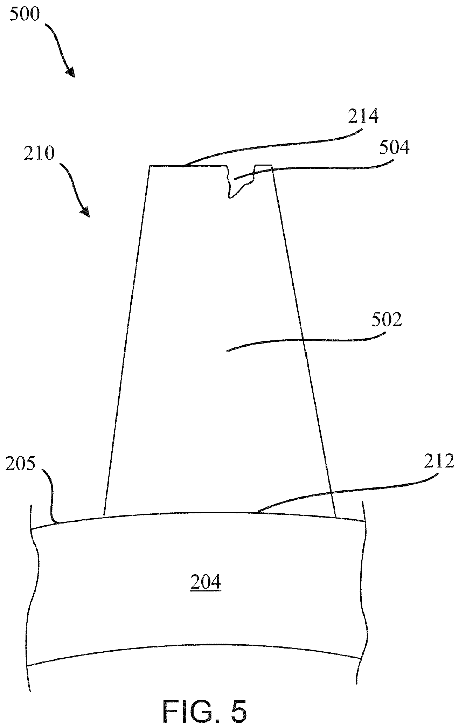

Referring now to FIG. 5, a front view of a portion of a bladed rotor 500 is illustrated with like numerals depicting like elements, in accordance with various embodiments. In various embodiments, the bladed rotor 500 is at overhaul (or another maintenance interval). In this regard, the bladed rotor 500 comprises a airfoil 210 with a defect 504 proximate the tip 214 of the blade. In various embodiments, the defect 504 can extend radially inward along the airfoil 210 to a location prior to the cooling passage network 402 or past the cooling passage network 402 from FIG. 4. The repair processes disclosed herein are not limited in this regard as described further herein.

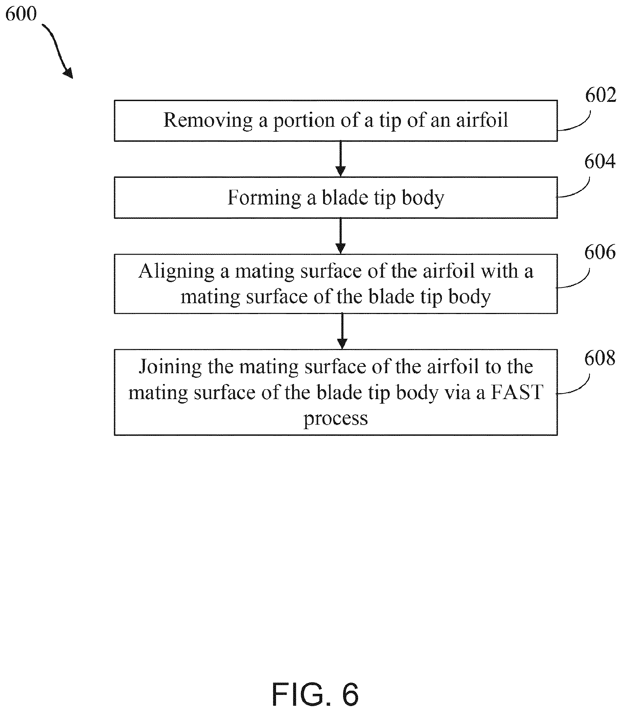

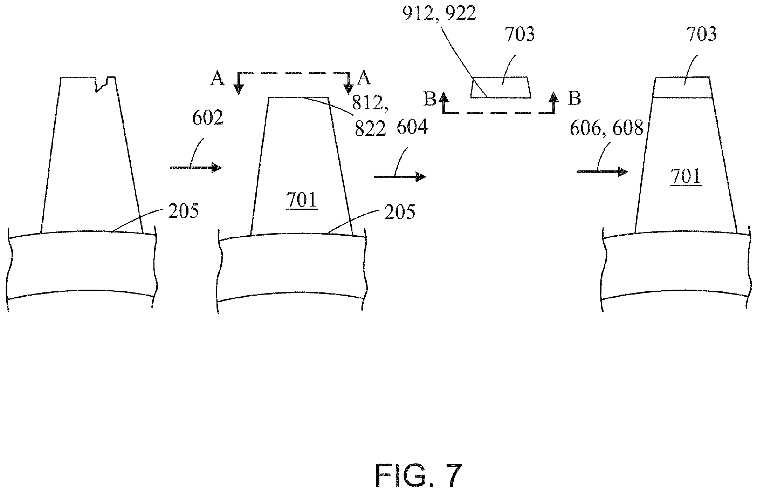

Referring now to FIGs. 6 and 7, a flow chart for a repair process 600 (FIG.6), and illustrations of the repair process 600 (FIG. 7) for repairing a tip of a blade for a bladed rotor is illustrated, in accordance with various embodiments. In various embodiments, the process 600 comprises removing a portion of a tip of an airfoil (step 602). In various embodiments, removing the portion of the tip of the airfoil can comprise grinding the portion of the airfoil off the airfoil. In various embodiments, after step 602, a mating surface 702 of an airfoil body 701 is created. In various embodiments, the mating surface 702 can be relatively flat and relatively smooth. For example, a surface roughness of the mating surface can be less than or equal to 16 microinches, or less than or equal to 8 microinches. In various embodiments, a flatness of the mating surface 702 can be between 0.0001 inches (0.0025 cm) and 0.01 (.25 cm), or between 0.0001 inches (0.0025 cm) and 0.005 inches (0.013 cm). However, the present disclosure is not limited in this regard. In various embodiments, by having a relatively flat mating surface and a relatively smooth mating surface, a more robust j oint can be generated from the solid-state joining process (i.e., the FAST process).

The FAST process is a low voltage, direct current (DC) pulsed current activated, pressure-assisted sintering, and synthesis technique. The FAST process can be used to synthesize adjacent components (e.g., the main airfoil body 302 and the blade tip body 306 from FIG. 6) and/or to densify materials in one step. Since the main airfoil body 302 and blade tip body 306 are electrically conductive, energy can be dissipated directly within the main airfoil body 302 and the blade tip body 306 and the electrically conductive parts of the pressing tool.

The FAST process comprises a mechanical loading system, which acts at the same time as high-power electrical circuit, placed in a controlled atmosphere. The electrical conductivity of the materials used for tooling facilitate low voltages (typically below 10 V applied to the whole set-up) and produce high currents (typically from 1 to 10 kA) leading to efficient heating. Even in the case of electrically non-conductive sintering powder, heat is quickly and efficiently transferred to the main airfoil body 302 and/or the blade tip body 306 described previously herein. Depending on the used hardware it is possible to define pulse and pause durations or more specialized pulse patterns. Typical pulse duration is in the order of a few milliseconds. Owing to the compact geometry of the die and punches, sintering cycles with heating rates as high as 1000 °C per minute are thus possible and enable to significantly reduce the total duration of the process and energy costs. Standard cooling rates up to 150 °C per minute are possible; additional active cooling under gas flow enable quenching rates of 400 °C min. At the same time, the simultaneous application of a uniaxial mechanical pressure enhances densification (maximal loads typically between 50 and 250 kN). The process can take place under vacuum or protective gas at atmospheric pressure: all heated parts are kept in a water-cooled chamber. Control of the processing cycle is usually done by temperature measurement (using either thermocouples or axial/radial pyrometers, etc.) but can also be achieved by other methods like power, current, or simply by displacement control. Maximal temperature achieved by using standard graphite tools lies up to 2400 °C.

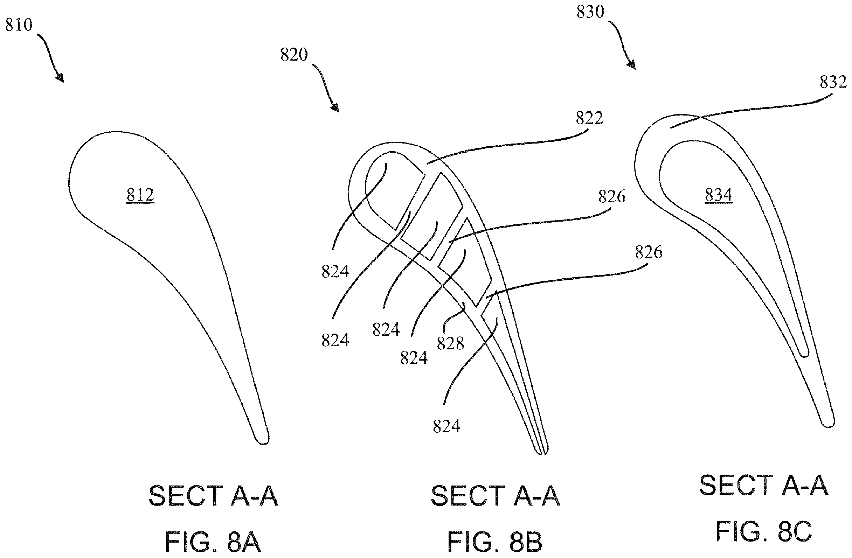

In various embodiments, in response to removing the portion of the airfoil in step 602, a span (i.e., a radial length measured from the platform 205) of the airfoil body 701 is reduced. With brief reference to FIG. 8A, 8B, and 8C a mating surface 812 that is defined by a first cross-sectional profile 810 (FIG. 8A), a mating surface 822 that is defined by a second cross-sectional profile 820 (FIG. 8B), and a mating surface 832 that is defined by a third cross-sectional profile 830 (FIG. 8C) are illustrated, in accordance with various embodiments. In various embodiments, the first cross-sectional profile 810 of FIG. 8A corresponds to a mating surface 812 of an airfoil body 701 that is being repaired where the defect 504 from FIG. 5 does not extend radially into the cooling passages network 402 from FIG. 4. In contrast, the second cross-sectional profile 820 of FIG. 8B corresponds to a mating surface 702 of an airfoil body 701 that is being repaired where the defect 504 from FIG. 5 extends radially into the cooling passages network 402 from FIG. 4. Thus, the process 600 from FIG. 6 is not limited based on a radial length of the defect 504 in accordance with various embodiments. For example, the FAST process disclosed herein can facilitate the joining of a blade tip body (e.g., blade tip body 306 from FIG. 3) to the airfoil body 701 being repaired via process 600, in accordance with various embodiments. In various embodiments, the second cross-sectional profile 820 defines a mating surface 822 which is defined by cooling passages 824, ribs 826, and exterior walls 828 that define the pressure and suction surfaces of the airfoil. Although illustrated in FIG. 8B as including ribs 826, the present disclosure is not limited in this regard. For example, a third cross-sectional profile 830 having a hollow cavity 834 disposed therethrough is also in accordance with the present disclosure.

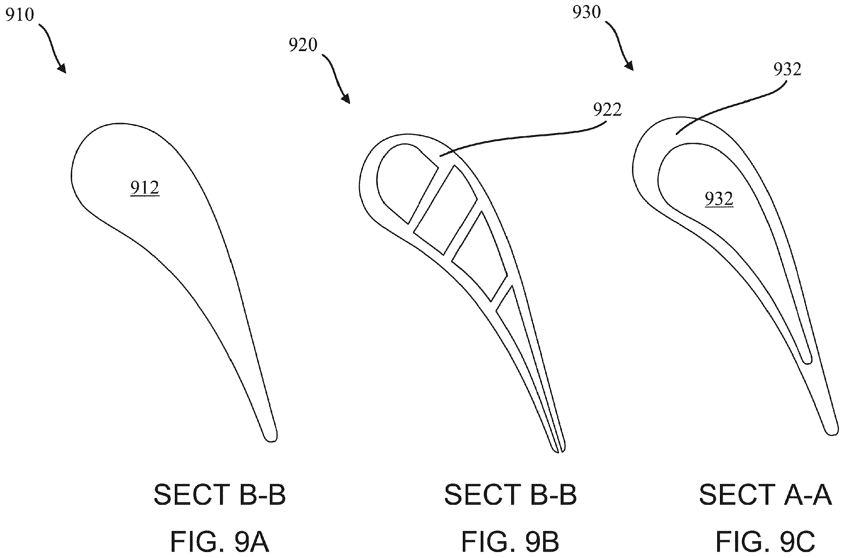

Referring back to FIGs. 6 and 7, the process 600 further comprises forming a blade tip body 703 (step 604). In various embodiments, the blade tip body 703 is in accordance with the blade tip body 306 from FIG. 3 described previously herein. However, the present disclosure is not limited in this regard. In various embodiments, the blade tip body 306 defines a mating surface (e.g., mating surface 912 from FIG. 9A in response to the airfoil body 701 having the mating surface 812 of FIG. 8A or mating surface 922 from FIG. 9B in response to the airfoil body 701 having the mating surface 822 of FIG. 8B. In this regard, the mating surface 912, 922 of the blade tip body 703 can be substantially complimentary to the mating surface 812, 822 of the airfoil body 701. "Substantially complimentary" as described herein refers to being within a 0.1 inch profile (0.25 cm profile) of the other mating surface, or being within a 0.05 inch profile (0.127 cm) of the other mating surface.

In various embodiments, step 604 further comprises casting the blade tip body 703. However, the present disclosure is not limited in this regard. For example, the blade tip body 703 can be additively manufactured and still be within the scope of this disclosure.

In various embodiments, the process 600 further comprises aligning the mating surface 812, 822, 832 of the airfoil body 701 with the mating surface 912, 922, 932 of the blade tip body 703 (step 606) and joining the airfoil body 701 to the blade tip body via a FAST process (step 608). In this regard, as described previously herein, the blade tip body 703 can comprise a material configured to withstand limiting structural characteristics typical of a blade tip to extend a life of a repaired bladed rotor, in accordance with various embodiments. In this regard, step 604 can comprise casting the blade tip body from a super alloy that is different from a material of the airfoil body 701. For example, the blade tip body 703 can comprise Rene 195, whereas the airfoil can comprise PWA 1429, in accordance with various embodiments. However, the present disclosure is not limited in this regard, and any alloy being coupled to an airfoil during a repair process as described herein is within the scope of this disclosure. For example, a super alloy that is configured for wear resistance or improved sealing with the shroud could be utilized and still be within the scope of the present disclosure.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, Band C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above described concepts can be used alone or in combination with any or all of the other above described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A method of repairing a tip for an airfoil, the method comprising:
removing a portion of the airfoil that reduces a radial height of the airfoil and defines a first mating surface of the airfoil;
forming a blade tip body for the airfoil, the blade tip body defining a second mating surface; and
joining the first mating surface to the second mating surface via a Field Assisted Sintering Technology ("FAST") process.

2. The method of claim 1, wherein the first mating surface and the second mating surface are substantially complimentary in shape.

3. The method of claim 1 or 2, wherein the first mating surface and the second mating surface each comprises ribs and at least partially define cooling passages of a cooling network for the airfoil.

4. The method of any preceding claim, wherein the airfoil comprises a first metal alloy and the blade tip body comprises a second metal alloy, and wherein the first metal alloy is different from the second metal alloy.

5. The method of any preceding claim, wherein forming the blade tip body comprises casting the blade tip body from a metal alloy.

6. The method of any preceding claim, wherein removing the portion of the airfoil includes grinding the portion of the airfoil to remove a defect from the tip of the airfoil.

7. The method of any preceding claim, wherein the first mating surface and the second mating surface each comprise a flatness between 0.0001 inches and 0.01 inches, and/or wherein a surface roughness of the first mating surface and the second mating surface are each less than 16 micro inches.

8. A method of manufacture, comprising:
forming a main airfoil body of a bladed rotor, the main airfoil body comprising a first metal alloy;
forming a blade tip body for the bladed rotor, the blade tip body comprising a second metal alloy, the second metal alloy being different from the first metal alloy; and
joining a first mating surface of the main airfoil body to a second mating surface of the blade tip body via a Field Assisted Sintering Technology ("FAST") process.

9. The method of manufacture of claim 8, further comprising joining each blade tip body in a plurality of the blade tip body to a corresponding main airfoil body in a plurality of the main airfoil body via the FAST process.

10. The method of manufacture of claim 8 or 9, wherein the first mating surface and the second mating surface are substantially complimentary in shape.

11. The method of manufacture of any of claims 8 to 10, wherein the first metal alloy and the second metal alloy are both a single crystal alloy, and/or wherein forming the blade tip body includes casting a preform of the blade tip body.

12. The method of manufacture of any of claims 8 to 11, wherein the first mating surface of the main airfoil body is disposed radially outward from a cooling passages network disposed within the main airfoil body, and/or wherein the first mating surface and the second mating surface each comprises ribs and at least partially define cooling passages of a cooling network for the airfoil.

13. A bladed rotor, comprising:
a hub;
a rotor disk extending radially outward from the hub and defining a platform; and
an airfoil extending radially outward from the airfoil, the airfoil comprising a main airfoil body made from a first metal alloy and a blade tip body made from a second metal alloy, the second metal alloy being different from the first metal alloy.

14. The bladed rotor of claim 13, wherein the airfoil comprises a joint region disposed between the main airfoil body and the blade tip body, the joint region disposed radially outward from a cooling passages network in the main airfoil body.

15. The bladed rotor of claim 13 or 14, wherein the bladed rotor comprises a plurality of the airfoil, and/or wherein the blade tip body and the main airfoil body each comprise a single crystal alloy, and/or wherein the rotor disk and the main airfoil body are mechanically coupled.
